# EUROPEAN PATENT APPLICATION

(11) **EP 2 336 842 A2**
(43) Date of publication of application: **22.06.2011**
(21) Application number: 10193607.8
(22) Date of filing: 03.12.2010
(51) Int. Cl.: G06F 1/16, G06F 3/048

(54) **Hand-held electronic device capable of control by reflecting grip of user and control method thereof**

(30) Priority: 17.12.2009 KR 20090126224
(71) Applicant: iriver Limited, Seoul 137-060 (KR)
(72) Inventor: Kim, Yong, Seoul 153-867 (KR)
(74) Representative: Gulde Hengelhaupt Ziebig & Schneider

(57) **Abstract**

Provided is a hand-held electronic device capable of manipulation by reflecting grip of user. The hand-held electronic device includes a display unit, a touch sensor, and a controller. The display unit is disposed in a front surface of the hand-held electronic device. The touch sensor is disposed in a certain region of the display unit, and sensing a touch of a user. The controller activates and displays a menu for manipulating the hand-held electronic device on the display unit, and performs control for the menu to be displayed in correspondence with the certain region of the display unit in which the touch sensor is disposed, when the touch sensor senses the touch of the user.

## Description

### CROSS-REFERENCE TO RELATED APPLICATIONS

This application claims priority to Korean Patent Application No. 10-2009-0126224, filed on December 17, 2009, the disclosure of which is incorporated herein by reference in its entirety.

### TECHNICAL FIELD

The present invention relates to a hand-held electronic device capable of manipulation by reflecting grip of user and a manipulation method thereof, and in particular, to a hand-held electronic device capable of manipulation by reflecting grip of user and a manipulation method thereof, which display a menu in a region touched by a user by reflecting a state where the user has gripped the hand-held electronic device and thus enable the user to conveniently manipulate the hand-held electronic device.

### BACKGROUND

Hand-held electronic devices, which secure mobility and are usable while hand-held by users, such as portable terminals, Personal Digital Assistants (PDAs), MP3 players, MP4 players, electronic dictionaries, Global Positioning System (GPS) devices, game players and cameras are generalized. The hand-held electronic devices may be used in a fixed location, but particularly, since the hand-held electronic devices have a feature in that they secure mobility, they may be more used while being moved like when commuting or going out. When users possess the hand-held electronic devices and use public transport such as subways and buses, since the users should hold their belongings such as bags or hang on to a strap with one hand, they should manipulate their hand-held electronic device with only another hand. However, on the assumption of that users can use both hands, hand-held electronic devices of the related art include fixed menus, which may manipulate the electronic devices, in the entire display units thereof. As a result, there is a limitation in that it is difficult for users to manipulate the hand-held electronic devices with only one hand.

The related art hand-held electronic device may sense a direction in which an image is displayed and change the direction so that the image can be displayed to always be suitable for a user's viewing angle. That is, when a user uses the hand-held electronic device in a lateral type, the hand-held electronic device may change a display direction through rotation in order to provide the image in a lateral type. When a user uses the hand-held electronic device in a vertical type, the hand-held electronic device may change a display direction through rotation in order to provide the image in a vertical type.

In this case, however, there is a limitation in that a menu for manipulating the electronic device still exists in a certain fixed region. That is, even when an image is rotated, a menu provides a fixed menu to a certain region in order to be unsuitable for the rotated image, thereby decreasing the convenience of users. Moreover, by providing a menu unsuitable for a rotated image, providing the menu is contrary to the requirements of consumers that recognize a design as an important factor in the hand-held electronic device. Some electronic devices do not provide menus when an image is rotated due to the limitations, thereby decreasing the convenience of users.

### SUMMARY

Accordingly, the present invention provides a hand-held electronic device capable of manipulation by reflecting grip of user and a manipulation method thereof, which display a menu for controlling the hand-held electronic device in a region that is touched by a user and differs from a certain fixed region in a display unit, thereby enabling the user to conveniently manipulate the hand-held electronic device.

The present invention also provides a hand-held electronic device capable of manipulation by reflecting grip of user, which further includes a motion sensor for sensing the rotation of the hand-held electronic device and thus can display an image to be suitable for a user's viewing angle. Moreover, the hand-held electronic device includes touch sensors in respective regions corresponding to four directions including the left, right, top and bottom of the display unit, and thus can display a menu touched by the user by sensing the grip of the left hand or right hand of the user even when the hand-held electronic device is rotated.

The present invention also provides a hand-held electronic device capable of manipulation by reflecting grip of user, which further includes a manipulation button unit for displaying a current-displayed menu and another menu, and thus can approach various menus similarly to a case of using it with both hands even when the user uses it with one hand.

The present invention also provides a hand-held electronic device capable of manipulation by reflecting grip of user and a manipulation method thereof, which manipulate the hand-held electronic device when sensing touch and shaking, simply and conveniently manipulating the hand-held electronic device through a shaking operation of shaking the hand-held electronic device. Moreover, the hand-held electronic device and the manipulation method sense both touch and shaking and thus can prevent the hand-held electronic device from being manipulated by shaking when a user does not desire manipulation.

According to an aspect, there is provided a hand-held electronic device capable of manipulation by reflecting grip of user including: a display unit disposed in a front surface of the hand-held electronic device; a touch sensor disposed in a certain region of the display unit, and sensing a touch of a user; and a controller activating and displaying a menu for manipulating the hand-held electronic device on the display unit, and performing control for the menu to be displayed in correspondence with the certain region of the display unit in which the touch sensor is disposed, when the touch sensor senses the touch of the user.

The touch sensor may include: a first touch sensor disposed in a first region which is formed along a first side being one side of the display unit; and a second touch sensor disposed in a second region which is formed along a second side being a side which faces the first side of the display unit, wherein the controller performs control for the menu to be displayed in correspondence with the first region when the touch of the user is sensed through the first touch sensor, the controller performs control for the menu to be displayed in correspondence with the second region when the touch of the user is sensed through the second touch sensor, and the controller performs controlling for the menu to be displayed in correspondence with the first and second regions when the touch of the user is sensed through the first and second touch sensors.

The first region may have a certain width from a left side of the display unit and is formed in a length direction along the left side of the display unit, and the controller may activate a left hand grip mode by performing control for the menu to be displayed in correspondence with the first region.

The second region may have a certain width from a right side of the display unit and be formed in a length direction along the right side of the display unit, and the controller may activate a right hand grip mode by performing control for the menu to be displayed in correspondence with the second region.

The hand-held electronic device first region may have a certain width from a left side of the display unit and be formed in a length direction along the left side of the display unit, the second region may have a certain width from a right side of the display unit and be formed in a length direction along the right side of the display unit, and the controller may activate a both-hand grip mode by performing control for the menu to be displayed in correspondence with the first and second regions.

The touch sensor may include: a third touch sensor disposed in a third region which is formed along a third side being a side which is vertical to the first side of the display unit; and a fourth touch sensor disposed at a fourth region which is formed along a fourth side being a side which faces the third side of the display unit, wherein the controller may perform control for the menu to be displayed in correspondence with the third region when the touch of the user is sensed through the third touch sensor, and the controller may perform control for the menu to be displayed in correspondence with the fourth region when the touch of the user is sensed through the fourth touch sensor.

The hand-held electronic device may further include: a motion sensor sensing rotation of the hand-held electronic device, wherein the controller may activate the first and second touch sensors when the motion sensor senses the hand-held electronic device in a lateral direction, and the controller may activate the third and fourth touch sensors when the motion sensor senses the hand-held electronic device in a vertical direction.

The hand-held electronic device may further include: a fifth touch sensor disposed in a fifth region being a region between the first and second regions of the display unit, wherein when the touch of the user is sensed through the fifth touch sensor, the controller may perform control for the menu to be displayed in correspondence with the fifth region.

The hand-held electronic device may further include: at least one manipulation button unit inputting a manipulation button command for manipulating the hand-held electronic device, in a surface other than the front surface in which the display unit is disposed, wherein when the manipulation button command is inputted through the manipulation button unit and the touch of the user is sensed through the touch sensor, the controller may perform control to activate and display the menu and another second menu.

When the menu is displayed in correspondence with the certain region of the display unit in which the touch sensor is disposed and the touch sensor senses a long touch of the user, the controller may perform control to activate and display the menu which is activated in the display unit and another third menu.

The hand-held electronic device may further include: a motion sensor sensing shaking of the hand-held electronic device, wherein when the motion sensor senses the shaking of the hand-held electronic device, the controller may perform control to display the menu.

According to another aspect, there is provided a hand-held electronic device capable of manipulation by reflecting grip of user including: a display unit disposed in a front surface of the hand-held electronic device; a touch sensor disposed in a certain region of the display unit, and sensing a touch of a user; a motion sensor sensing shaking of the hand-held electronic device; and a controller generating a manipulation command for manipulating the hand-held electronic device to control the hand-held electronic device, when the touch sensor senses the touch of the user and the motion sensor senses the shaking of the hand-held electronic device.

The controller may generate a manipulation command according to the number of times the hand-held electronic device is shaken which is sensed through the motion sensor.

According to another embodiment, there is provided a manipulation method of a hand-held electronic device, which includes a display unit, including: sensing, by the hand-held electronic device, a touch of a user; setting, by the hand-held electronic device, a region to display in the display unit according to a touch region of the user; and activating and displaying, by the hand-held electronic device, a menu for manipulating the hand-held electronic device.

The setting of a region to display may include: setting a region to display according to a left hand grip mode when the touch region of the user is a region which has a certain width from a left side of the display unit; setting a region to display according to a right hand grip mode when the touch region of the user is a region which has a certain width from a right side of the display unit; and setting a region to display according to a both-hand grip mode when the touch region of the user is a region which has a certain width from the left side of the display unit and a region which has a certain width from the right side of the display unit.

The manipulation method may further include: sensing whether the hand-held electronic device is rotated, before the setting of a region to display.

The manipulation method may further include: inputting a manipulation button command for manipulating the hand-held electronic device, before the setting of a region to display.

According to another embodiment, there is provided a manipulation method of a hand-held electronic device, which includes a display unit, including: sensing, by the hand-held electronic device, a touch of a user; sensing, by the hand-held electronic device, shaking of the hand-held electronic device; and generating, by the hand-held electronic device, a manipulation command for manipulating the hand-held electronic device to control the hand-held electronic device, when the touch of the user and the shaking of the hand-held electronic device are sensed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

FIG. 1 is an exemplary diagram illustrating the used state of a hand-held electronic device capable of manipulation by reflecting grip of user according to an embodiment of the present invention.

FIG. 2 is an exemplary diagram illustrating the used state of a hand-held electronic device capable of manipulation by reflecting grip of user according to another embodiment of the present invention.

FIG. 3 is a block diagram illustrating the configuration of a hand-held electronic device according to an embodiment of the present invention.

FIG. 4 is an exemplary diagram illustrating a hand-held electronic device which has activated a left hand grip mode by reflecting the grip of the left hand of a user, according to an embodiment of the present invention.

FIG. 5 is an exemplary diagram illustrating a hand-held electronic device which has activated a right hand grip mode by reflecting the grip of the right hand of a user, according to an embodiment of the present invention.

FIG. 6 is an exemplary diagram illustrating a hand-held electronic device which has activated a both-hand grip mode by reflecting the grip of the both hands of a user, according to an embodiment of the present invention.

FIG. 7 is an exemplary diagram illustrating a hand-held electronic device which has been changed from a left hand grip mode to a right hand grip mode and activated, according to an embodiment of the present invention.

FIG. 8 is an exemplary diagram illustrating a hand-held electronic device capable of manipulation by reflecting grip of user according to an embodiment of the present invention.

FIG. 9 is a flowchart illustrating a manipulation method of a hand-held electronic device capable of manipulation by reflecting grip of user according to an embodiment of the present invention.

FIG. 10 is a flowchart illustrating a manipulation method of a hand-held electronic device capable of manipulation by reflecting grip of user according to another embodiment of the present invention.

### DETAILED DESCRIPTION OF EMBODIMENTS

Hereinafter, exemplary embodiments will be described in detail with reference to the accompanying drawings. Throughout the drawings and the detailed description, unless otherwise described, the same drawing reference numerals will be understood to refer to the same elements, features, and structures. The relative size and depiction of these elements may be exaggerated for clarity, illustration, and convenience. The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

Hand-held electronic devices are electronic devices having a size that may be manipulated while hand-held by users. As the hand-held electronic devices, for example, there may be portable terminals, Personal Digital Assistants (PDAs), MP3 players, MP4 players, electronic dictionaries, Global Positioning System (GPS) devices, game players and cameras.

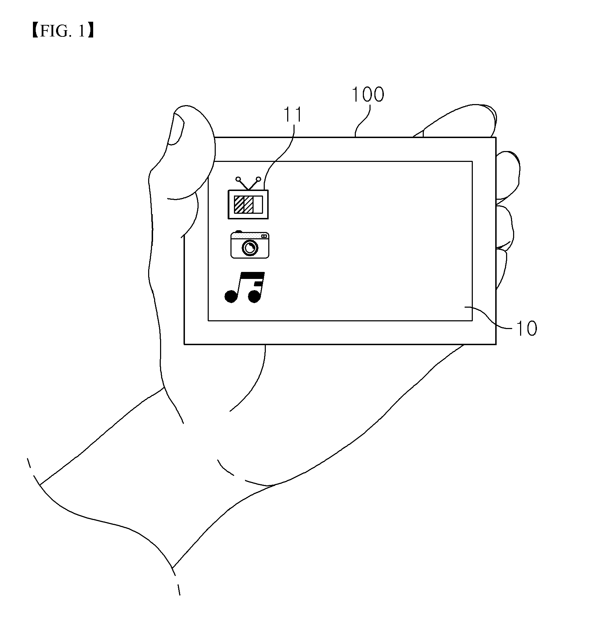

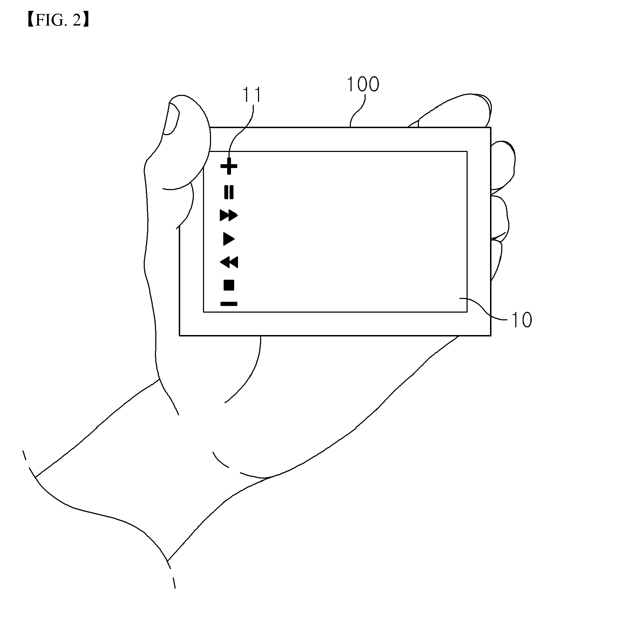

When a user manipulates a hand-held electronic device that is being held by its hand, it may manipulate the hand-held electronic device with only one of a right hand and a left hand or both hands. Particularly, as illustrated in FIGS. 1 and 2, when the user holds and manipulates the hand-held electronic device with only one hand, it may generally lay the hand-held electronic device on a flat palm and manipulate the hand-held electronic device through touch.

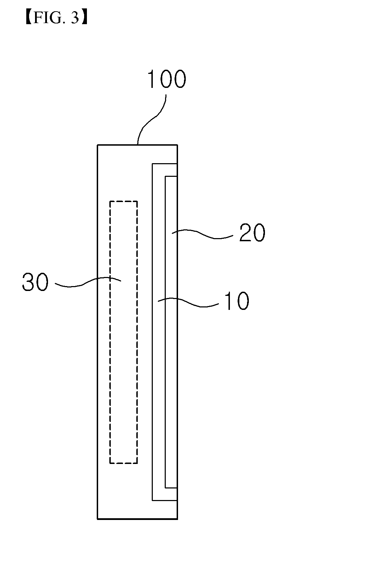

As illustrated in FIG. 3, a hand-held electronic device according to an embodiment of the present invention may include a display unit 10, a touch sensor 20 and a controller 30.

The display unit 10 is disposed at the front surface of the hand-held electronic device, and displays a menu for manipulating the hand-held electronic device or a file that is being currently executed.

The touch sensor 20 is disposed at a certain region of the display unit 10, and senses the touch of a user. As an example of the touch sensor 20, there may be a touch screen or a touch pad. The touch sensor 20 detects the level and position of a pressure that is applied by a finger and the variation of an electric charge due to the touch of the finger, and inputs a control command to a device including the touch sensor 20.

The touch sensor 20 may include a first touch sensor 21 and a second touch sensor 22. The first touch sensor 21 is disposed at a first region that is formed along a first side being the one side of the display unit 10. The second touch sensor 22 is disposed at a second region that is formed along a second side being a side which faces the first side of the display unit 10.

Moreover, the touch sensor 20 may include a third touch sensor 23 and a fourth touch sensor 24. The third touch sensor 23 is disposed at a third region that is formed along a third side being a side that is vertical to the first side of the display unit 10. The fourth touch sensor 24 is disposed at a fourth region that is formed along a fourth side being a side which faces the third side of the display unit 10.

When the touch sensor 20 senses the touch of a user, the controller 30 activates a menu for manipulating the hand-held electronic device in the display unit 10 to display the menu on the display unit 10. At this point, particularly, the controller 30 performs controlling for the menu to be displayed in correspondence with the certain region of the display unit 10 in which the touch sensor 20 is disposed.

For example, as illustrated in FIG. 1, the menu may relate to all kinds of functions, which are included in the hand-held electronic device, such as viewing DMB broadcasting, listening to music and a camera or an application. Alternatively, as illustrated in FIG. 2, the menu may relate to controlling the functions of the hand-held electronic device such as file play, stop, volume up and volume down when a music file or a video file is being replayed.

The controller 30 displays the menu so that it may enable a user to conveniently manipulate the menu in a state where the user is holding the hand-held electronic device with its hand. When using the hand-held electronic device, the user touches the display unit 10 in a state where it is holding the hand-held electronic device. In this case, there is high probability that a region, in which the initial touch of the user is sensed, may be one which the user can conveniently touch after. Accordingly, when the touch of the user is sensed through the first touch sensor 21, the controller 30 performs controlling for a menu to be displayed in correspondence with the first region. When the touch of the user is sensed through the second touch sensor 22, the controller 30 performs controlling for the menu to be displayed in correspondence with the second region. When the touch of the user is sensed through the first and second touch sensors 21 and 22, the controller 30 performs controlling for the menu to appropriately be distributed and displayed in correspondence with the first and second regions. When the touch of the user is sensed through the third touch sensor 23, the controller 30 performs controlling for the menu to be displayed in correspondence with the third region. When the touch of the user is sensed through the fourth touch sensor 24, the controller 30 performs controlling for the menu to be displayed in correspondence with the fourth region. The hand-held electronic device according to an embodiment of the present invention displays a menu requiring the touch of a user in a region where the initial touch of the user is sensed, thereby enabling the user to easily manipulate the hand-held electronic device. This will be described below in more detail.

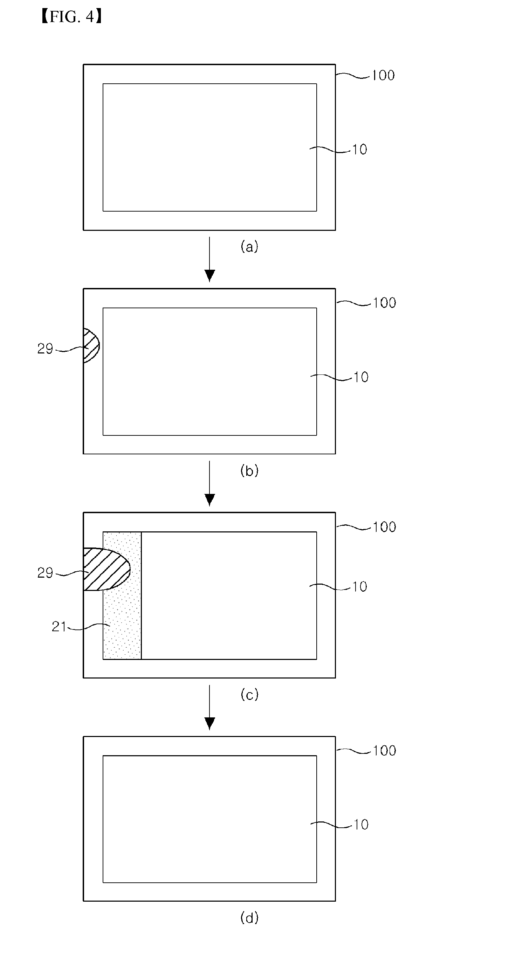

FIG. 4 is an exemplary diagram illustrating a hand-held electronic device which has activated a left hand grip mode by reflecting the grip of the left hand of a user, according to an embodiment of the present invention.

In a left hand grip mode where a user holds the hand-held electronic device 100 with a left hand, the user may support the hand-held electronic device 100 with the palm of the left hand and fingers other than its thumb, and may touch and manipulate the hand-held electronic device 100 with the thumb. Therefore, as illustrated in FIG. 4, when a touch 29 is sensed through the first touch sensor 21 that has a certain width from the left side of the display unit 10 and is formed in a length direction along the left side of the display unit 10 among the touch sensor 20, the controller 30 determines the grip of the left hand and activates the left hand grip mode.

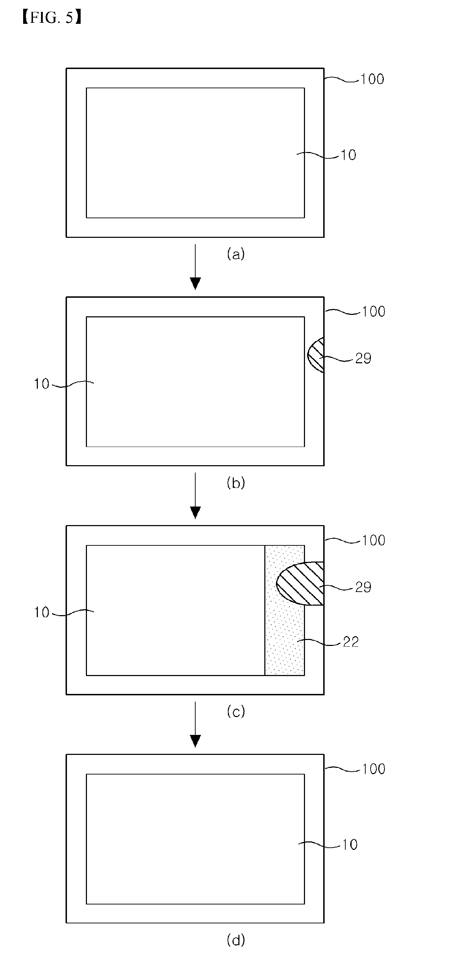

FIG. 5 is an exemplary diagram illustrating a hand-held electronic device which has activated a right hand grip mode by reflecting the grip of the right hand of a user, according to an embodiment of the present invention.

In a right hand grip mode where a user holds the hand-held electronic device 100 with a right hand, the user may support the hand-held electronic device 100 with the palm of the right hand and fingers other than its thumb, and may touch and manipulate the hand-held electronic device 100 with the thumb. Therefore, as illustrated in FIG. 5, when a touch 29 is sensed through the second touch sensor 22 that has a certain width from the right side of the display unit 10 and is formed in a length direction along the right side of the display unit 10 among the touch sensor 20, the controller 30 determines the grip of the right hand and activates the right hand grip mode.

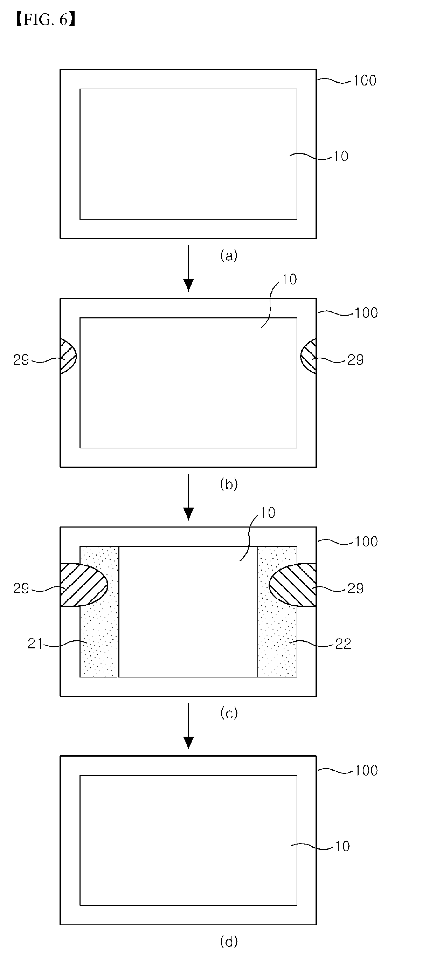

FIG. 6 is an exemplary diagram illustrating a hand-held electronic device which has activated a both-hand grip mode by reflecting the grip of the both hands of a user, according to an embodiment of the present invention.

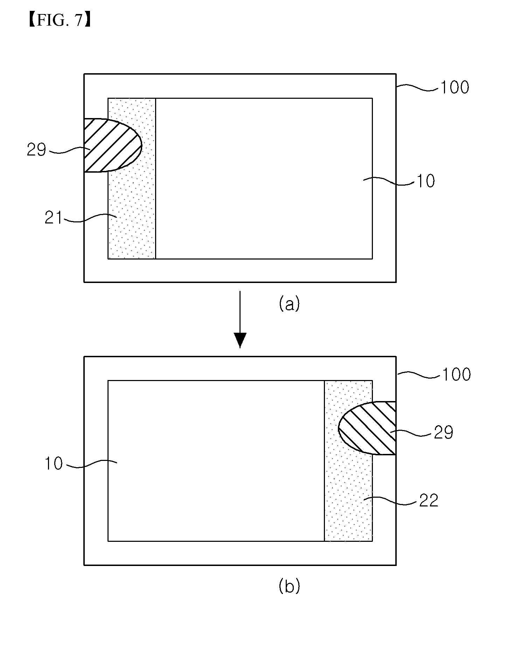

In a both-hand grip mode where a user holds the hand-held electronic device 100 with both hands, the user may support the hand-held electronic device 100 with the palms of the both hands and fingers other than their thumbs, and may touch and manipulate the hand-held electronic device 100 with the thumbs of the both hands. As illustrated in FIG. 7, the left grip mode where the user holds the hand-held electronic device 100 with its left hand is changed to the right hand grip mode when the user changes a grip position and holds the hand-held electronic device 100 with its right hand.

A hand-held electronic device 100 according to another embodiment of the present invention may further include a motion sensor. The motion sensor senses the rotation of the hand-held electronic device 100, and allows each image to be displayed suitably for a user's viewing angle on the display unit 10 even when the user rotates the hand-held electronic device 100 by 90 degrees, 180 degrees or 270 degrees.

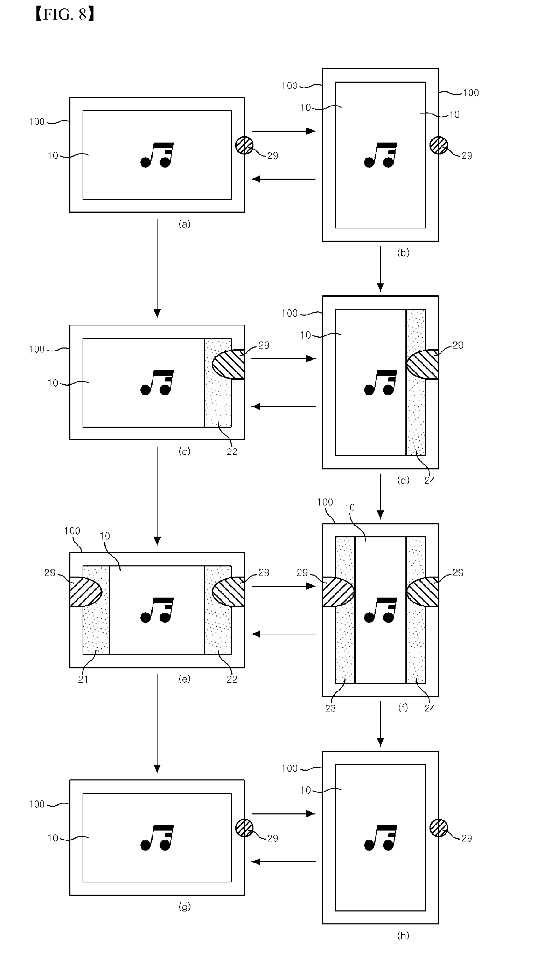

As illustrated in FIG. 8, in the case of a portion (a) of FIG. 8 where the motion sensor senses the hand-held electronic device 100 in a lateral direction, the controller 30 activates the first and second touch sensors 21 and 22, as illustrated in a portion (c) of FIG. 8 and a portion (e) of FIG. 8. In the case of a portion (b) of FIG. 8 where the motion sensor senses the hand-held electronic device 100 in a vertical direction, the controller 30 activates the third and fourth touch sensors 23 and 24, as illustrated in a portion (d) of FIG. 8 and a portion (f) of FIG. 8. The above description has been made on that the controller 30 activates the first and second touch sensors 21 and 22 when the motion sensor senses the hand-held electronic device 100 in a lateral direction and the controller 30 activates the third and fourth touch sensors 23 and 24 when the motion sensor senses the hand-held electronic device 100 in a vertical direction, but the hand-held electronic device 100 according to another embodiment of the present invention is not limited thereto. On the other hand, it is apparent to those skilled in the art that the controller 30 may activate the third and fourth touch sensors 23 and 24 when the motion sensor senses the hand-held electronic device 100 in a lateral direction and the controller 30 may activate the first and second touch sensors 21 and 22 when the motion sensor senses the hand-held electronic device 100 in a vertical direction.

According to another embodiment of the present invention, furthermore, the touch sensor 20 may further include a fifth touch sensor that is disposed in a fifth region being a region between the first and second regions of the display unit 10. In this case, the controller 30 may perform controlling for a menu to be displayed in correspondence with the fifth region. The hand-held electronic device 100 according to another embodiment of the present invention displays a menu on a region that is initially touched by a user, and thus can display the menu in order for the user to easily touch the display unit 10 regardless of a posture where the user holds the hand-held electronic device 100.

The hand-held electronic device 100 according to an embodiment of the present invention may further include at least one manipulation button unit in surfaces other than a front surface in which the display unit 10 is disposed. The manipulation button unit may be a physical button, and may also sense a touch to receive a command like a touch screen or a touch pad. The manipulation button unit may be disposed in a region that fingers other than thumbs can reach in the hand-held electronic device 100.

In the left hand grip mode or the right hand grip mode according to an embodiment of the present invention, since a menu may be displayed in only any one portion of the display unit 10, it may be difficult to display various menus. For displaying various menus, therefore, when a manipulation button command is inputted through the manipulation button unit in a state where the hand-held electronic device 100 senses the touch of a user through the touch sensor 20 and displays a menu, the hand-held electronic device 100 may allow a displayed menu and another second menu to be displayed. Accordingly, the hand-held electronic device 100 can display various menus in a limited region, and thus the user can approach various menus similarly to a case of using the hand-held electronic device 100 with both hands even when it uses the hand-held electronic device 100 with one hand.

Likewise with the manipulation button unit, when the long touch of a user is sensed in a state where the hand-held electronic device 100 senses the touch of the user through the touch sensor 20 and displays a menu, the hand-held electronic device 100 may allow a displayed menu and another third menu to be displayed. Accordingly, the hand-held electronic device 100 can display various menus in a limited region, and thus the user can approach various menus similarly to a case of using it with both hands even when it uses the hand-held electronic device 100 with one hand.

A hand-held electronic device 100 according to another embodiment of the present invention may further include a motion sensor that senses the shaking of the hand-held electronic device 100.

When the motion sensor further senses shaking, the controller 30 may perform controlling to display a menu. When a user shakes the hand-held electronic device 100 in a state where it touches a certain region of the display unit 10 of the hand-held electronic device 100, the touch sensor and the motion sensor may sense shaking, and the controller 30 may display a menu.

A user controls the hand-held electronic device 100 through an operation of shaking the hand-held electronic device 100, and displaying a menu according to the control of the user can be very convenient to the user. However, the user can walk or run and use public transport such as a subway or a bus while holding the hand-held electronic device 100. In this case, since the hand-held electronic device 100 may be controlled by shaking even when the user does not desire the manipulation of the hand-held electronic device 100, it may be difficult to actually apply the shaking operation to the hand-held electronic device 100. Accordingly, as described above, for preventing the hand-held electronic device 100 from being controlled when the user does not desire manipulation, the user may control the hand-held electronic device 100 or allow a menu to be displayed when shaking is sensed in a state where a touch is sensed by the hand-held electronic device 100. That is, since a touch should be sensed by the hand-held electronic device 100 even when the hand-held electronic device 100 is controlled by shaking, a menu may not be displayed when the user walks or runs without touching the hand-held electronic device 100.

Moreover, the touch sensor sensing a touch or the motion sensor sensing the shaking or rotation of the hand-held electronic device 100 may be turned on/off according to a user's selection.

The hand-held electronic device capable of manipulation by reflecting grip of user according to another embodiment of the present invention may include a display unit, a touch sensor, a motion sensor, and a controller.

According to another embodiment of the present invention, the display unit is disposed at the front surface of the hand-held electronic device and displays a screen. The touch sensor is disposed at a certain region of the display unit and senses the touch of a user. The motion sensor senses the shaking of the hand-held electronic device. When the touch sensor senses the touch of the user and the motion sensor senses shaking, the controller generates a manipulation command for manipulating the hand-held electronic device to control the hand-held electronic device.

As an example of the manipulation command, there may be a menu display command, a next play command and a fast forward command, but the manipulation command is not limited thereto. It is apparent to those skilled in the art that the manipulation command include all kinds of commands necessary for the manipulation of the hand-held electronic device.

When the manipulation command is the menu display command, the controller performs controlling to display a menu for manipulating the hand-held electronic device.

The motion sensor may sense the number of times the hand-held electronic device is shaken, and the controller may generate a manipulation command according to the number of shaking times. For example, the controller may generate different manipulation commands according to the number of shaking times, like that an upper menu is displayed when the hand-held electronic device is shaken one time and a lower menu is displayed when the hand-held electronic device is shaken two times.

Even when a menu is displayed according to the menu display command, the menu being displayed in correspondence with a certain region where the touch sensor of the display unit is disposed is as described above.

When the hand-held electronic device is an electronic device capable of replaying an MP3 file and the MP3 file is being replayed, the manipulation command may be the next play command or the fast forward command. When the manipulation command is the next play command, the controller may perform controlling to replay a piece of music succeeding a file that is being replayed. When the manipulation command is the fast forward command, the controller may perform controlling to fast forward a file that is being replayed.

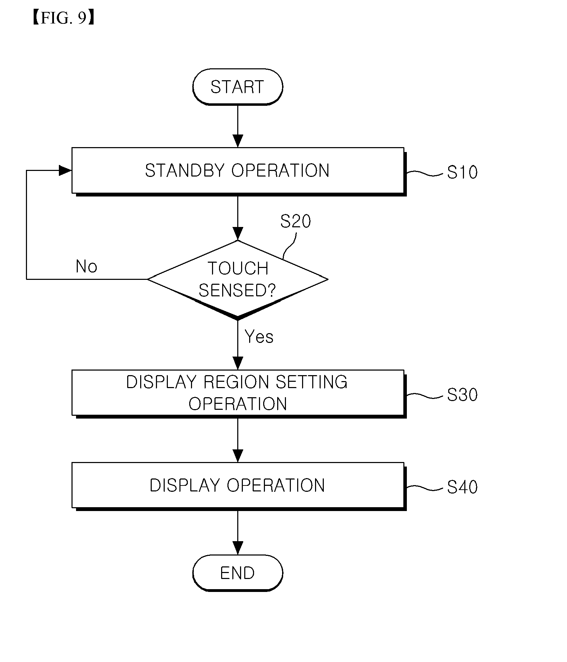

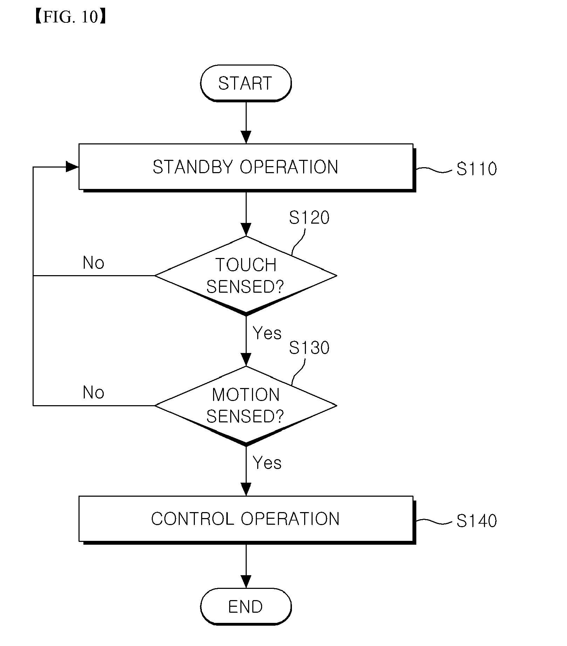

FIG. 9 is a flowchart illustrating a manipulation method of a hand-held electronic device capable of manipulation by reflecting grip of user according to an embodiment of the present invention. FIG. 10 is a flowchart illustrating a manipulation method of a hand-held electronic device capable of manipulation by reflecting grip of user according to another embodiment of the present invention.

Referring to FIG. 9, the hand-held electronic device performs a standby operation S10 that may display a menu through the touch of a user. The standby operation S10 may sense the touch of the user when the user touches the hand-held electronic device because the hand-held electronic device has been turned on.

Subsequently, the hand-held electronic device performs a touch sensing operation S20 of sensing the touch of the user.

When the touch of the user is sensed through the touch sensing operation S20, the hand-held electronic device performs a display region setting operation S30 that sets a region to display in the display unit according to the touch region of the user.

That is, when the touch region of the user is a region that has a certain width from the left side of the display unit, the hand-held electronic device sets a region to display according to the left hand grip mode. When the touch region of the user is a region that has a certain width from the right side of the display unit, the hand-held electronic device sets a region to display according to the right hand grip mode. When the touch region of the user is a region that has a certain width from the left side of the display unit and is a region that has a certain width from the right side of the display unit, the hand-held electronic device sets a region to display according to the both-hand grip mode.

Subsequently, the hand-held electronic device performs a display operation S40 that activates and displays a menu for manipulating the hand-held electronic device.

According to another embodiment of the present invention, before the display region setting operation S30, the hand-held electronic device may further perform a rotation sensing operation that senses whether it is rotated. The hand-held electronic device senses whether it is rotated through the rotation sensing operation and allows an image to be displayed suitably for the user's viewing angle in spite of rotation. Moreover, even when the hand-held electronic device is rotated, the controller also performs controlling for a menu to be displayed in a region that is touched by the user.

Moreover, before the display region setting operation S30, the hand-held electronic device may further perform a manipulation button command input operation that inputs a manipulation button command for manipulating it with the manipulation button unit. When the manipulation button command is inputted, by allowing a displayed menu and another second menu to be displayed, the hand-held electronic device can display various menus in a limited region, and thus the user can approach various menus similarly to a case of using the hand-held electronic device with both hands even when it uses the hand-held electronic device with one hand.

According to another embodiment of the present invention referring to FIG. 10, the hand-held electronic device performs a standby operation S110 that may display a menu through the touch of a user. When the hand-held electronic device is turned on and is touched by the user, the standby operation S1 10 may sense the touch of the user.

The hand-held electronic device may perform a touch sensing operation S120 that senses the touch of the user and a motion sensing operation S130 that senses the shaking of the hand-held electronic device. The hand-held electronic device may perform the touch sensing operation S120 before or after the motion sensing operation S130.

Subsequently, when the hand-held electronic device senses the touch of the user and shaking through the touch sensing operation S120 and the motion sensing operation S130, the hand-held electronic device may perform a control operation S 140 that generates a manipulation command for manipulating it to control it.

As an example of the manipulation command, there may be a menu display command, a next play command and a fast forward command.

When the manipulation command is the menu display command, the hand-held electronic device displays a menu for manipulating it in the control operation S 140. At this point, the menu being displayed in a region touched by the user is as described above.

When the manipulation command is the next play command, the controller performs controlling to replay a piece of music succeeding a file that is being replayed in the control operation S140. When the manipulation command is the fast forward command, the controller performs controlling to fast forward a file that is being replayed in the control operation S 140.

It is apparent to those skilled in the art that the manipulation command include all kinds of commands necessary for the manipulation of the hand-held electronic device.

The hand-held electronic device capable of manipulation by reflecting grip of user and a manipulation method thereof according to embodiments of the present invention display a menu for controlling the hand-held electronic device in a region that is touched by a user and differs from a certain fixed region in a display unit, thereby enabling the user to conveniently manipulate the hand-held electronic device.

The hand-held electronic device capable of manipulation by reflecting grip of user according to embodiments of the present invention further includes the motion sensor for sensing the rotation of the hand-held electronic device and thus can display an image to be suitable for a user's viewing angle. Moreover, the hand-held electronic device includes the touch sensors in respective regions corresponding to four directions including the left, right, top and bottom of the display unit, and thus can display a menu touched by the user by sensing the grip of the left hand or right hand of the user even when the hand-held electronic device is rotated.

The hand-held electronic device capable of manipulation by reflecting grip of user according to embodiments of the present invention further includes the manipulation button unit for displaying a current-displayed menu and another menu, and thus can approach various menus similarly to a case of using it with both hands even when the user uses it with one hand.

The hand-held electronic device capable of manipulation by reflecting grip of user and the manipulation method thereof according to embodiments of the present invention manipulate the hand-held electronic device when sensing touch and shaking, simply and conveniently manipulating the hand-held electronic device through a shaking operation of shaking the hand-held electronic device. Moreover, the hand-held electronic device and the manipulation method sense both touch and shaking and thus can prevent the hand-held electronic device from being manipulated by shaking when a user does not desire manipulation.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A hand-held electronic device capable of manipulation by reflecting grip of user, comprising:
a display unit disposed in a front surface of the hand-held electronic device;
a touch sensor disposed in a certain region of the display unit, and sensing a touch of a user; and
a controller activating and displaying a menu for manipulating the hand-held electronic device on the display unit, and performing control for the menu to be displayed in correspondence with the certain region of the display unit in which the touch sensor is disposed, when the touch sensor senses the touch of the user.

2. The hand-held electronic device of claim 1, wherein the touch sensor comprises:
a first touch sensor disposed in a first region which is formed along a first side being one side of the display unit; and
a second touch sensor disposed in a second region which is formed along a second side being a side which faces the first side of the display unit,
wherein:
when the touch of the user is sensed through the first touch sensor, the controller performs control for the menu to be displayed in correspondence with the first region,
when the touch of the user is sensed through the second touch sensor, the controller performs control for the menu to be displayed in correspondence with the second region, and
when the touch of the user is sensed through the first and second touch sensors, the controller performs controlling for the menu to be displayed in correspondence with the first and second regions.

3. The hand-held electronic device of claim 2, wherein:
the first region has a certain width from a left side of the display unit and is formed in a length direction along the left side of the display unit, and
the controller activates a left hand grip mode by performing control for the menu to be displayed in correspondence with the first region.

4. The hand-held electronic device of claim 2, wherein:
the second region has a certain width from a right side of the display unit and is formed in a length direction along the right side of the display unit, and
the controller activates a right hand grip mode by performing control for the menu to be displayed in correspondence with the second region.

5. The hand-held electronic device of claim 2, wherein:
the first region has a certain width from a left side of the display unit and is formed in a length direction along the left side of the display unit,
the second region has a certain width from a right side of the display unit and is formed in a length direction along the right side of the display unit, and
the controller activates a both-hand grip mode by performing control for the menu to be displayed in correspondence with the first and second regions.

6. The hand-held electronic device of claim 2, wherein the touch sensor comprises:
a third touch sensor disposed in a third region which is formed along a third side being a side which is vertical to the first side of the display unit; and
a fourth touch sensor disposed at a fourth region which is formed along a fourth side being a side which faces the third side of the display unit,
wherein:
when the touch of the user is sensed through the third touch sensor, the controller performs control for the menu to be displayed in correspondence with the third region, and
when the touch of the user is sensed through the fourth touch sensor, the controller performs control for the menu to be displayed in correspondence with the fourth region.

7. The hand-held electronic device of claim 6, further comprising: a motion sensor sensing rotation of the hand-held electronic device,
wherein:
when the motion sensor senses the hand-held electronic device in a lateral direction, the controller activates the first and second touch sensors, and
when the motion sensor senses the hand-held electronic device in a vertical direction, the controller activates the third and fourth touch sensors.

8. The hand-held electronic device of claim 2, further comprising: a fifth touch sensor disposed in a fifth region being a region between the first and second regions of the display unit,
wherein when the touch of the user is sensed through the fifth touch sensor, the controller performs control for the menu to be displayed in correspondence with the fifth region.

9. The hand-held electronic device of claim 1, further comprising: at least one manipulation button unit inputting a manipulation button command for manipulating the hand-held electronic device, in a surface other than the front surface in which the display unit is disposed,
wherein when the manipulation button command is inputted through the manipulation button unit and the touch of the user is sensed through the touch sensor, the controller performs control to activate and display the menu and another second menu.

10. The hand-held electronic device of claim 1, wherein when the menu is displayed in correspondence with the certain region of the display unit in which the touch sensor is disposed and the touch sensor senses a long touch of the user, the controller performs control to activate and display the menu which is activated in the display unit and another third menu.

11. The hand-held electronic device of claim 1, further comprising: a motion sensor sensing shaking of the hand-held electronic device,
wherein when the motion sensor senses the shaking of the hand-held electronic device, the controller performs control to display the menu.

12. A hand-held electronic device capable of manipulation by reflecting grip of user, comprising:
a display unit disposed in a front surface of the hand-held electronic device;
a touch sensor disposed in a certain region of the display unit, and sensing a touch of a user;
a motion sensor sensing shaking of the hand-held electronic device; and
a controller generating a manipulation command for manipulating the hand-held electronic device to control the hand-held electronic device, when the touch sensor senses the touch of the user and the motion sensor senses the shaking of the hand-held electronic device.

13. The hand-held electronic device of claim 12, wherein the controller generates a manipulation command according to the number of times the hand-held electronic device is shaken which is sensed through the motion sensor.

14. A manipulation method of a hand-held electronic device including a display unit, the manipulation method comprising:
sensing, by the hand-held electronic device, a touch of a user;
setting, by the hand-held electronic device, a region to display in the display unit according to a touch region of the user; and
activating and displaying, by the hand-held electronic device, a menu for manipulating the hand-held electronic device.

15. The manipulation method of claim 14, wherein the setting of a region to display comprises:
setting a region to display according to a left hand grip mode when the touch region of the user is a region which has a certain width from a left side of the display unit;
setting a region to display according to a right hand grip mode when the touch region of the user is a region which has a certain width from a right side of the display unit; and
setting a region to display according to a both-hand grip mode when the touch region of the user is a region which has a certain width from the left side of the display unit and a region which has a certain width from the right side of the display unit.

16. The manipulation method of claim 14, further comprising: sensing whether the hand-held electronic device is rotated, before the setting of a region to display.

17. The manipulation method of claim 14, further comprising: inputting a manipulation button command for manipulating the hand-held electronic device, before the setting of a region to display.

18. A manipulation method of a hand-held electronic device including a display unit, the manipulation method comprising:
sensing, by the hand-held electronic device, a touch of a user;
sensing, by the hand-held electronic device, shaking of the hand-held electronic device;
and
generating, by the hand-held electronic device, a manipulation command for manipulating the hand-held electronic device to control the hand-held electronic device, when the touch of the user and the shaking of the hand-held electronic device are sensed.
